# EUROPEAN PATENT APPLICATION

(11) **EP 4 823 187 A1**
(43) Date of publication of application: **14.10.2026**
(21) Application number: 26168507.7
(22) Date of filing: 27.03.2026
(51) Int. Cl.: H04W 48/20, H04W 36/00, H04W 48/12, H04W 76/19, H04W 76/30

(54) **STORAGE MANAGEMENT OF AN UPLINK WAKE-UP SIGNAL CONFIGURATION**

(30) Priority: 07.04.2025 EP 25168750
(71) Applicant: Nokia Technologies Oy, 02610 Espoo (FI)
(72) Inventor: SAYED HASSAN, Mohamad, Epinay sur-orge (FR); KOSKELA, Jarkko Tuomo, Oulu (FI)
(74) Representative: Nokia EPO representatives

(57) **Abstract**

According to an aspect, a first apparatus comprising at least one processor and one or more memories, may receive, from a second apparatus, an uplink wake-up signal (UL-WUS) configuration for at least one cell, wherein the UL-WUS configuration is related to a request for system information block #1 (SIB1) of the at least one cell. The first apparatus may further receive, from the second apparatus, an indication related to storage of the UL-WUS configuration and store the UL-WUS configuration in the first apparatus based on the received indication. The first apparatus may even further determine to perform cell reselection and in response to the determining to perform the cell reselection, transmit an on-demand SIB1 (OD-SIB1) request based on the stored UL-WUS configuration.

## Description

### TECHNICAL FIELD

The disclosure relates generally to wireless communications and, more particularly but not exclusively, to an apparatus for managing storage of an Uplink Wake-Up Signal configuration for on-demand system information block #1 (SIB1) request.

### BACKGROUND

System information (SI) comprises, at least in new radio (NR) systems, of Master Information Block (MIB) and System Information Blocks (SIBs). The SIBs are divided into minimum SI (MIB+SIB1) and other SI (OSI). At least in NR (5G), the MIB and SIB1 are mandatory for accessing a cell, wherein SIB1 carries critical information required for the UE to access the cell e.g., random access parameters and information regarding the availability and scheduling of other SIBs e.g. mapping of SIBs to SI message, periodicity, SI-window size etc. SIB1 also indicates whether one or more SIBs are only provided on-demand, in which case, it may also provide PRACH configuration needed by the UE to request for the required SI.

Network Energy Saving cells (NES cells) are used to decrease power consumption of the radio access network (RAN) and use specific configurations to achieve this effect (e.g., smaller coverage, reusing time-frequency resources etc.). While SIB1 can be periodically transmitted by a NES cell, it would be beneficial that the SIB1 is requested on-demand by a UE to further decrease the energy consumption.

The UE may acquire multiple SIBs during operation from multiple broadcasting cells. To access a cell after entering idle state (e.g., radio link failure, RRCRelease message), the UE may have to have access to a valid SIB1 to re-establish communications. Storing and managing the SIBs may, among other issues, clutter the memory of the UE, increasing processing time and therefore power consumption.

### SUMMARY

The scope of protection sought for various example embodiments of the invention is set out by the independent claims. The example embodiments and features, if any, described in this specification that do not fall under the scope of the independent claims are to be interpreted as examples useful for understanding various example embodiments of the invention.

According to a first aspect, a first apparatus is disclosed. The first apparatus may comprise: at least one processor; and one or more memories storing instructions that, when executed by the at least one processor, cause the first apparatus to at least: receive, from a second apparatus, an uplink wake-up signal (UL-WUS) configuration for at least one cell, wherein the UL-WUS configuration is related to a request for system information block #1 (SIB1) of the at least one cell; receive, from the second apparatus, an indication related to storage of the UL-WUS configuration; store the UL-WUS configuration in the first apparatus based on the received indication; determine to perform cell reselection; and in response to the determining to perform the cell reselection, transmit an on-demand SIB1 (OD-SIB1) request based on the stored UL-WUS configuration.

In an example embodiment of the first aspect, the UL-WUS configuration is carried in at least one of: a dedicated RRC delivery message; or a response to a dedicated RRC message request.

In an example embodiment of the first aspect, the instructions, when executed by the at least one processor, may further cause the first apparatus to at least: transmit the OD-SIB1 request, based on the stored UL-WUS configuration, to at least one of: the second apparatus; or a third apparatus, wherein the third apparatus provides a neighboring cell to a cell provided by the second apparatus.

In an example embodiment of the first aspect, at least one of the second apparatus or the third apparatus are configured with on-demand system information block #1 (OD-SIB1).

In an example embodiment of the first aspect, the received UL-WUS configuration relates to one or more neighboring cells to a cell provided by the second apparatus, and wherein the indication related to the storage of the UL-WUS configuration indicates at least one neighboring cell from the one or more of neighboring cells in the UL-WUS configuration, and wherein the instructions, when executed by the at least one processor, further cause the apparatus to at least: store at least the UL-WUS configuration of the at least one indicated neighboring cell; and in response to the determining to perform the cell reselection, transmit the OD-SIB1 request to the at least one indicated cell based on the stored UL-WUS configuration.

In an example embodiment of the first aspect, the instructions, when executed by the at least one processor, may further cause the apparatus to at least: determine to perform the cell reselection based on at least one of: detecting a radio link failure (RLF); or receiving a radio resource control release message (RRCRelease).

In an example embodiment of the first aspect, the indication related to the storage of the UL-WUS configuration may comprise information on a timer.

In an example embodiment of the first aspect, a reference point for the timer comprises at least one of: a RRC release message; or radio link failure detection.

In an example embodiment of the first aspect, the indication related to the storage of the UL-WUS configuration may further comprise an indication to discard, from the one or more memories, at least one SIBx that is not related to the received UL-WUS configuration.

In an example embodiment of the first aspect, the indication related to the storage of the UL-WUS configuration further comprises an indication to discard the stored UL-WUS configuration in case another UL-WUS configuration is received from a cell not provided by the second apparatus.

In an example embodiment of the first aspect, the received indication related to the storage of the UL-WUS configuration may further comprises information whether a SIBx related to the received UL-WUS configuration is to be kept stored or discarded after the determining to perform the cell reselection.

In an example embodiment of the first aspect, the received indication related to the storage of the UL-WUS configuration may further comprise instructions to indicate validity of a SIBx related to the received UL-WUS configuration, and the instructions, when executed by the at least one processor, may further cause the first apparatus to at least: validate the SIBx related to the received UL-WUS configuration.

According to a second aspect, a method is disclosed. The method may comprise: receiving, from a second apparatus by a first apparatus, an uplink wake-up signal (UL-WUS) configuration for at least one cell, wherein the UL-WUS configuration is related to a request for system information block #1 (SIB1) of the at least one cell; receiving, from the second apparatus by the first apparatus, an indication related to storage of the UL-WUS configuration; storing the UL-WUS configuration in the first apparatus based on the received indication; determining to perform cell reselection; and in response to the determining to perform the cell reselection, transmitting an on-demand SIB1 (OD-SIB1) request based on the stored UL-WUS configuration.

In an example embodiment of the second aspect, the UL-WUS configuration is carried in at least one of: a dedicated RRC delivery message; or a response to a dedicated RRC message request.

An example embodiment of the second aspect may further comprise: transmitting the OD-SIB1 request to at least one of: the second apparatus; or a third apparatus, wherein the third apparatus provides a neighboring cell to a cell provided by the second apparatus.

In an example embodiment of the second aspect, the second apparatus and the third apparatus may be configured with on-demand system information block #1 (OD-SIB1).

An example embodiment of the second aspect may further comprise: the received UL-WUS configuration relates to one or more neighboring cells to a cell provided by the second apparatus, and wherein the indication related to the storage of the UL-WUS configuration indicates at least one neighboring cell from the one or more of neighboring cells in the UL-WUS configuration, and wherein the method may furthe comprise: storing at least the UL-WUS configuration of the at least one indicated neighboring cell; and in response to the determining to perform the cell reselection, transmitting the OD-SIB1 request to the at least one indicated cell based on the stored UL-WUS configuration.

An example embodiment of the second aspect may further comprise: determining to perform the cell reselection based on at least one of: detecting a radio link failure (RLF); or receiving a radio resource control release message (RRCRelease).

In an example embodiment of the second aspect, the indication related to the storage of the UL-WUS configuration may comprise information on a timer.

In an example embodiment of the second aspect, a reference point for the timer comprises at least one of: a RRC release message; or radio link failure detection.

In an example embodiment of the second aspect, the indication related to the storage of the UL-WUS configuration may further comprise an indication to discard at least one SIBx that is not related to the received UL-WUS configuration.

In an example embodiment of the second aspect, the indication related to the storage of the UL-WUS configuration further comprises an indication to discard the stored UL-WUS configuration in case another UL-WUS configuration is received from a cell not provided by the second apparatus.

In an example embodiment of the second aspect, the received indication related to the storage of the UL-WUS configuration may further comprise information whether a SIBx related to the received UL-WUS configuration is to be stored or discarded after the determining to perform the cell reselection.

In an example embodiment of the second aspect, the received indication related to the storage of the UL-WUS configuration may further comprise instructions to indicate validity of a SIBx related to the received UL-WUS configuration, and the method may further comprise: validating the SIBx related to the received UL-WUS configuration.

According to a third aspect, a computer program is disclosed. The computer program may comprise instructions which, when executed by a first apparatus, cause the first apparatus to at least perform: receive, from a second apparatus, an uplink wake-up signal (UL-WUS) configuration for at least one cell, wherein the UL-WUS configuration is related to a request for system information block #1 (SIB1) of the at least one cell; receive, from the second apparatus, an indication related to storage of the UL-WUS configuration; store the UL-WUS configuration in the first apparatus based on the received indication; determine to perform cell reselection; and in response to the determining to perform the cell reselection, transmit an on-demand SIB1 (OD-SIB1) request based on the stored UL-WUS configuration.

According to a fourth aspect, a second apparatus is disclosed. The second apparatus may comprise: at least one processor; and at least one memory storing instructions which, when executed by the at least one processor, cause the second apparatus to at least: transmit, to a first apparatus, an uplink wake-up signal (UL-WUS) configuration for at least one cell, wherein the UL-WUS configuration is related to a request for system information block #1 (SIB1) of the at least one cell; transmit, to the first apparatus, an indication related to storage of the transmitted UL-WUS configuration; receive, from the first apparatus, an on-demand SIB1 (OD-SIB1) request based on the transmitted indication related to the storage of the UL-WUS configuration; and transmit at least one SIB1 to the first apparatus.

In an example embodiment of the fourth aspect, the instructions, when executed by the at least one processor, may further cause the second apparatus to at least: transmit the indication related to the storage of the at least one UL-WUS configuration based on that one or more neighboring cells are configured to operate with on-demand SIB1.

In an example embodiment of the fourth aspect, the indication related to the storage of the UL-WUS configuration may comprise information on a timer.

In an example embodiment of the fourth aspect, the indication related to storage of the UL-WUS configuration may further comprise an indication to discard at least one SIBx that is not related to the transmitted UL-WUS configuration.

In an example embodiment of the fourth aspect, the instructions, when executed by the at least one processor, may further cause the second apparatus to at least: update a master information block in response to receiving the OD-SIB1 request; and transmit the updated master information block.

According to a fifth aspect, a method is disclosed. The method may comprise: transmitting, to a first apparatus by a second apparatus, an uplink wake-up signal (UL-WUS) configuration for at least one cell, wherein the UL-WUS configuration is related to a request for system information block #1 (SIB1) of the at least one cell; transmitting, to the first apparatus by the second apparatus, an indication related to storage of the transmitted UL-WUS configuration; receiving, from the first apparatus by the second apparatus, an on-demand SIB1 (OD-SIB1) request based at least partially on the transmitted indication related to the storage of the UL-WUS configuration; and transmitting, to the first apparatus by the second apparatus, at least one SIB1 to the first apparatus.

An example embodiment of the fifth aspect may further comprise: transmitting the indication related to the storage of the at least one UL-WUS configuration based on that one or more neighboring cells are configured to operate with on-demand SIB1.

In an example embodiment of the fifth aspect, the indication related to the storage of the UL-WUS configuration may comprise information on a timer.

In an example embodiment of the fifth aspect, the indication related to storage of the UL-WUS configuration may further comprise an indication to discard at least one SIBx that is not related to the transmitted UL-WUS configuration.

An example embodiment of the fifth aspect may further comprise: update a master information block in response to receiving the OD-SIB1 request; and transmit the updated master information block.

According to a sixth aspect, a computer program is disclosed. The computer program may comprise instructions which, when executed by a second apparatus, cause the second apparatus to at least perform: transmit, to a first apparatus, an uplink wake-up signal (UL-WUS) configuration for at least one cell, wherein the UL-WUS configuration is related to a request for system information block #1 (SIB1) of the at least one cell; transmit, to the first apparatus, an indication related to storage of the transmitted UL-WUS configuration; receive, from the first apparatus, an on-demand SIB1 (OD-SIB1) request based at least partially on the transmitted indication related to the storage of the UL-WUS configuration; and transmit at least one SIB1 to the first apparatus.

According to a seventh aspect, a third apparatus is disclosed. The apparatus may comprise: means for receiving, from a fourth apparatus, an uplink wake-up signal (UL-WUS) configuration for at least one cell, wherein the UL-WUS configuration is related to a request for system information block #1 (SIB1) of the at least one cell; means for receiving, from the fourth apparatus, an indication related to storage of the UL-WUS configuration; means for storing the UL-WUS configuration in the third apparatus based on the received indication; means for determining to perform cell reselection; and in response to the determining to perform the cell reselection, means for transmitting an on-demand SIB1 (OD-SIB1) request based on the stored UL-WUS configuration.

In an example embodiment of the seventh aspect, the UL-WUS configuration is carried in at least one of: a dedicated RRC delivery message; or a response to a dedicated RRC message request.

An example embodiment of the seventh aspect, may further comprise: means for transmitting the OD-SIB1 request, based on the stored UL-WUS configuration, to at least one of: the fourth apparatus; or a firth apparatus, wherein the fifth apparatus provides a neighboring cell to a cell provided by the second apparatus.

In an example embodiment of the seventh aspect, at least one of the fourth apparatus or the fifth apparatus are configured with on-demand system information block #1 (OD-SIB1).

In an example embodiment of the seventh aspect, the received UL-WUS configuration relates to one or more neighboring cells to a cell provided by the fourth apparatus, and wherein the indication related to the storage of the UL-WUS configuration indicates at least one neighboring cell from the one or more of neighboring cells in the UL-WUS configuration, and the embodiment may further comprise: means for storing at least the UL-WUS configuration of the at least one indicated neighboring cell; and in response to the determining to perform the cell reselection, means for transmitting the OD-SIB1 request to the at least one indicated cell based on the stored UL-WUS configuration.

An example embodiment of the seventh aspect may further comprise means for determining to perform the cell reselection based on at least one of: detecting a radio link failure (RLF); or receiving a radio resource control release message (RRCRelease).

In an example embodiment of the seventh aspect, the indication related to the storage of the UL-WUS configuration may comprise information on a timer.

In an example embodiment of the seventh aspect, a reference point for the timer comprises at least one of: a RRC release message; or radio link failure detection.

In an example embodiment of the seventh aspect, the indication related to the storage of the UL-WUS configuration may further comprise an indication to discard, from the one or more memories, at least one SIBx that is not related to the received UL-WUS configuration.

In an example embodiment of the seventh aspect, the indication related to the storage of the UL-WUS configuration further comprises an indication to discard the stored UL-WUS configuration in case another UL-WUS configuration is received from a cell not provided by the fourth apparatus.

In an example embodiment of the seventh aspect, the received indication related to the storage of the UL-WUS configuration may further comprise information whether a SIBx related to the received UL-WUS configuration is to be kept stored or discarded after the determining to perform the cell reselection.

In an example embodiment of the seventh aspect, the received indication related to the storage of the UL-WUS configuration may further comprise instructions to indicate validity of a SIBx related to the received UL-WUS configuration, and the embodiment may further comprise: means for validating the SIBx related to the received UL-WUS configuration.

According to an eight aspect, a fourth apparatus is disclosed. The fourth apparatus may comprise: means for transmitting, to a third apparatus, an uplink wake-up signal (UL-WUS) configuration for at least one cell, wherein the UL-WUS configuration is related to a request for system information block #1 (SIB1) of the at least one cell; means for transmitting, to the third apparatus, an indication related to storage of the transmitted UL-WUS configuration; means for receiving, from the third apparatus, an on-demand SIB1 (OD-SIB1) request based on the transmitted indication related to the storage of the UL-WUS configuration; and means for transmitting at least one SIB1 to the third apparatus.

An example embodiment of the eighth aspect may further comprise: means for transmitting the indication related to the storage of the at least one UL-WUS configuration based on that one or more neighboring cells are configured to operate with on-demand SIB1.

In an example embodiment of the eigth aspect, the indication related to the storage of the UL-WUS configuration may comprise information on a timer.

In an example embodiment of the eight aspect, the indication related to storage of the UL-WUS configuration may further comprise an indication to discard at least one SIBx that is not related to the transmitted UL-WUS configuration.

An example embodiment of the eight aspect may further comprise: means for updating a master information block in response to receiving the OD-SIB1 request; and means for transmitting the updated master information block.

### DESCRIPTION OF THE DRAWINGS

The accompanying drawings, which are included to provide a further understanding of the embodiments and constitute a part of this specification, illustrate embodiments and together with the description help to explain the principles of the embodiments. In the drawings:
**FIGs 1A-1C** illustrate three types of on-demand SIB1 request scenarios in a system comprising at least a user equipment, a cell A and a network energy saving cell.
**FIG. 2A** illustrates a first apparatus configured to practice example embodiments.
**FIG. 2B** illustrates a second apparatus configured to practice example embodiments.
**FIG. 3** illustrates a signalling diagram according to an example embodiment between a user equipment and two network energy saving cells.
**FIG. 4** illustrates a flow diagram of a method according to an example embodiment.
**FIG. 5** illustrates a flow diagram of a method according to another example embodiment.
**FIG. 6** illustrates a scenario of on-demand SIB1 request according to an example embodiment, wherein a serving cell provides an uplink wake-up signal configuration to a UE relating to at least one neighboring cell.

Like reference numerals are used to designate like parts in the accompanying drawings.

### DETAILED DESCRIPTION

Reference will now be made in detail to embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

Radio Access Network (RAN) uses the physical broadcast channel (PBCH) to provide master information block (MIB) to user equipment's (UEs). In new radio (NR), the UE gets MIB by decoding the PBCH from SS-PBCH block beam (SS, Synchronization Signal). The MIB provides information for the UE to further find the System Information Block #1 (SIB1), which is further required for minimum cell access. The MIB may include, for example, subcarrier spacing for SIB1, Msg2, Msg4 for initial access, paging, and broadcast SI-messages. After acquiring the MIB, the UE tries to acquire the SIB1.

The UE may apply system information (SI) acquisition procedure upon at least one of: sell selection; reselection, return from out of coverage; after reconfiguration with sync completion; after entering the network from another Radio Access Technology (RAT); upon receiving an indication that system information has changed; upon receiving a PWS notification; or whenever the UE does not have a valid version of a stored SIB.

As an example, when the UE acquires a MIB, a SIB1 or a SI message in a serving cell, and if the UE stores the acquired SIB, the UE may store: an associated *areaScope,* if present; the first *PLMN-identity* in the *PLMN-IdentyInfoList*; the *cellI-dentity*; the *systemInformationAreaID,* if present, and the *valueTag,* if present; as indicated in *si-SchedulingInfo* for the SIB. The UE may store a valid stored version of the SI except MIB, SIB1, SIB6, SIB7 or SIB8 e.g., after cell reselection among others. Consequently, at least some portions of storage and management of SIBs in addition to valid SIB for current serving cell may be left to the UE implementation.

Over time, the UE may acquire multiple SIBs and store them in memory. These stored SIBs may be used to try to re-establish communications with the network after entering idle state (RRC_IDLE), which may happen due to radio link failure (RLF) or after receiving a Radio Resource Control (RRC) Release Message (RRCRelease), for example. In general the UE tries to 'camp' in another cell after the communications have failed, and acquire the SIB1 from another cell.

In addition to filling memory capacity of the UE, the validity of the stored SIBs may be in question, which may lead to the UE being unable to re-establish communications.

Some examples of UE SIB management may include: delete any stored version of a SIB after 3 hours from the moment it was successfully confirmed valid.

In another example, for each stored SIB: if the *areaScope* is associated and its value for the stored version of the SIB is the same as the value received in the *si-SchedulingInfo* for that SIB from the serving cell: if the first *PLMN-Identity* included in the *PLMN-IdentityInfoList,* the *systemInformationAreaID* and the *valueTag* that are included in the *si-SchedulingInfo* for the SIB received from the serving cell are identical to the *PLMN-Identity,* the *systemInformationAreaID* and the *valueTag* associated with the stored version of that SIB, the UE may consider the stored SIB as valid for the cell.

Network energy saving (NES) cells may be providing coverage in an area a UE is operating in. For a NES cell, decreasing broadcast time-frequency resources can be beneficial in reducing the overall power consumption. This may mean, that SIB1 is not always available for the UE. An Uplink Wake-Up Signal (UL-WUS) can be used to request the SIB1 from a cell in case of a RLF or RRCRelease, for example.

An UL-WUS configuration for an UL-WUS signal may be included in SI, particularly in SIB during RRC_CONNECTED state by the UE. A SIB comprising one or more UL-WUS configurations may be referred to as SIBx (or SIB-X) in the description. The network may provide the UE a SIBx (or SIB) during RRC _CONNECTED via RRC delivery message, for example.

The UE can use SIBx information after state transition from RRC_CONNECTED to RRC _IDLE, from RRC _CONNECTED to RRC_INACTIVE, for example. Further, the SIBx information may be used after RLF or RRCRelease, for example. The UE then may transmit an on-demand SIB1 (OD-SIB1) request based on the UL-WUS configuration to a cell utilizing on-demand SIB1. In other words, for an OD-SIB1 request, information of a target cell is included in the UL-WUS configuration.

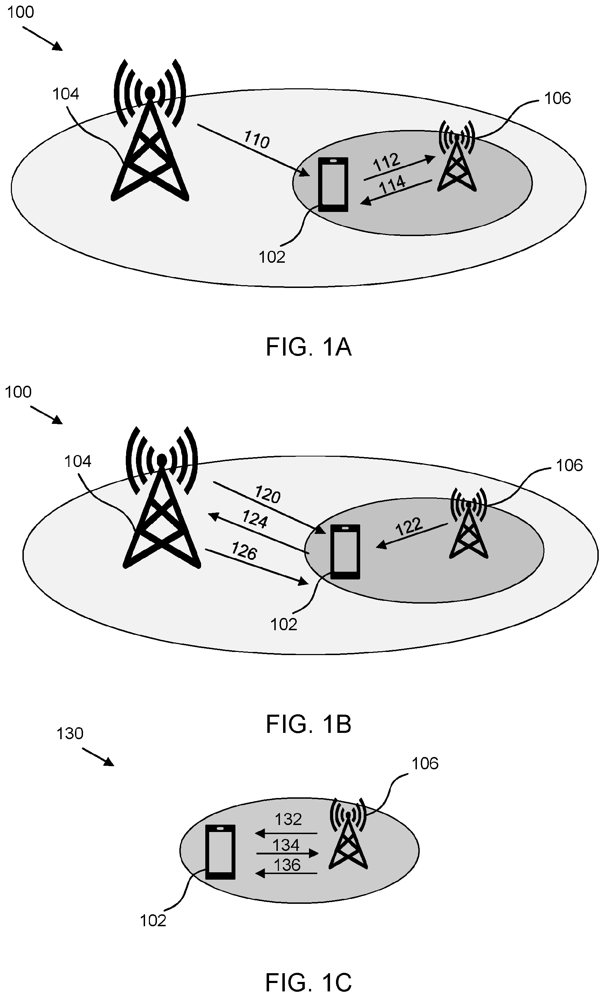

Figure 1A illustrates an example scenario of a system 100 providing context for the description.

The system 100 may comprise one or more UEs 102, a cell A 104 and a NES cell 106. The NES cell 106 and the cell A 104 may be configured for OD-SIB1.

At step 110, the cell A 104 may provide the UE 102 with at least one UL-WUS configuration (e.g., SIBx). The at least one UL-WUS configuration may be related to a request for SIB1 for at least one cell and it may further comprise a Physical Random-Access Channel (PRACH) resource via radio resource configuration. In the example of Figure 1A, the UL-WUS configuration indicates at least the NES cell 106.

In case of state transitioning from RRC _CONNECTED to RRC _IDLE, RRC _CONNECTED to RRC_INACTIVE, RLF with the cell A 104, or by a RRC release message from the cell A 104 to the UE 102, the UE 102 may transmit an on-demand SIB1 (OD-SIB1), based on the received at least one UL-WUS configuration, to the NES cell 106 at step 112, and at step 114, the NES cell 106 may respond by providing the SIB1 to the UE 102.

It will be noted that the cell A 104 may comprise a NES cell. Embodiments of a network node described later herein may comprise alternatively a NES cell or the cell A 104, for example.

Figure 1B illustrates another example scenario of the system 100.

At step 120, the cell A 104 may provide the UE 102 with an UL-WUS configuration (e.g., SIBx) indicating the cell A 104. Previously or later to step 120, at step 122 the NES cell 106 may provide the UE 102 a SIB1.

The UE 102 may be in RRC _CONNECTED with the NES cell 106 and it may experience RLF, for example. And at step 124, the UE 102 may transmit an OD-SIB1 request based on the RLF to the cell A 104 and at step 126, the UE 102 may receive the SIB1 in response from the cell A 104.

Figure 1C illustrates another example scenario of a system 130 comprising at least one NES cell 106 and one or more UEs 102 to introduce a "standalone" scenario.

At step 132, the NES cell 106 may transmit an UL-WUS configuration to the UE 102 indicating the NES cell 106. At step 134, the UE 102 may transmit the UL-WUS signal, based on the received configuration, to the NES cell 106 and in response, receive SIB1 at step 136.

Considering that the example system 100 in Figures 1A-C may comprise a plurality of UEs 102, cell A's 104 and NES cells 106, SIB management and storage may become an issue for the UEs 102 and reducing overall power consumption of the RAN (e.g., NES cells 106) may be implemented by preventing or reducing SIB1 transmissions by the NES cells 106, for example.

It is at least one objective of the description to provide a signaling method between cells and UEs to indicate UE SIB management. Further, apparatuses performing the signaling are provided for implementing the signaling. Provided embodiments may help in reducing the overall power consumption of both RAN and UE and ensure validity of a SIB after, for example, cell (re-)selection). Further, as the network side knows which neighboring cells are/are not equipped with OD-SIB1 capability, it may be beneficial to let the network indicate the UE, how to manage the SIBs.

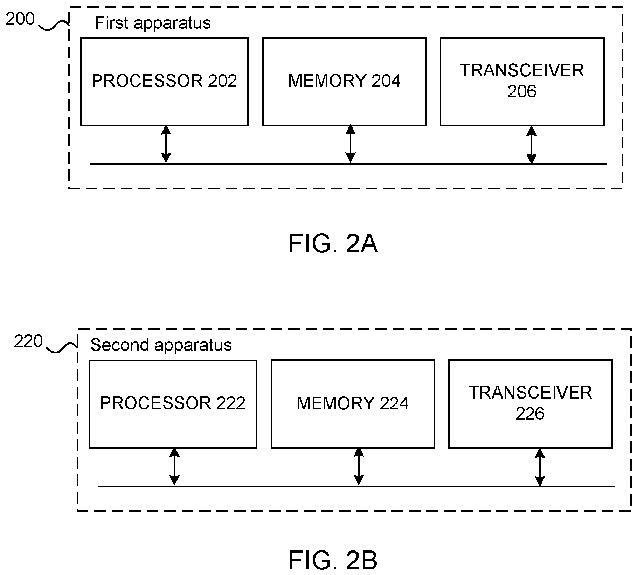

Figure 2A and Figure 2B illustrate block diagrams of a first apparatus 200 and a second apparatus 220 to practice example embodiments.

The first apparatus 200 may comprise any of various types of devices used directly by an end user entity and capable of communication in a wireless network, such as a user equipment (UE). Such devices include but are not limited to smartphones, tablet computers, smart watches, laptop computers, internet-of-things (IoT) devices, massive machine-to-machine (M2M) devices, massive machine type communications (mMTC) devices, industrial internet-of-things (IIoT) devices, enhanced mobile broadband (eMBB) devices, ultra-reliable low-latency communication (URLLC) devices, relay nodes (such as integrated access and backhaul nodes) configured to facilitate backhaul connections, and/or devices mounted in vehicles, etc. In other words, the first apparatus 200 may comprise a terminal device.

The first apparatus 200 may be referred to as user equipment 200 (UE 200) in the description.

The second apparatus 220 may comprise, for example, a base station, a transmission reception point, TRP, a LEO satellite, and/or a relay node. The base station may include, for example, a 5G or 6G base station (gNB), a network energy saving node (a network node providing a NES cell) or any such device providing an air interface for the UEs to connect to a wireless network via wireless transmissions.

The second apparatus 220 may be referred to as network node 220 (NN 220) in the description.

The UE 200 may comprise one or more processors 202 and one or more memories 204 that comprise computer program code. The UE 200 may also include other elements, such as a transceiver 206 configured to enable the UE 200 to transmit and/or receive information to/from other devices, as well as other elements not shown in Fig. 2A. In one example, the UE 200 may use the transceiver 206 to transmit or receive signalling information and data in accordance with at least one cellular communication protocol. The transceiver 206 may be configured to provide at least one wireless radio connection, such as for example a 3GPP mobile broadband connection (for example, 5G or 6G). The transceiver 206 may comprise, or be configured to be coupled to, at least one antenna to transmit and/or receive radio frequency signals.

Consequently, the NN 220 may comprise one or more processors 222 and one or more memories 224 that comprise computer program code. The NN 220 may also include other elements, such as a transceiver 226 configured to enable the UE 200 to transmit and/or receive information to/from other devices, as well as other elements not shown in Fig. 2B. In one example, the NN 220 may use the transceiver 226 to transmit or receive signalling information and data in accordance with at least one cellular communication protocol. The transceiver 226 may be configured to provide at least one wireless radio connection, such as for example a 3GPP mobile broadband connection (for example, 5G or 6G). The transceiver 226 may comprise, or be configured to be coupled to, at least one antenna to transmit and/or receive radio frequency signals.

Although the UE 200 and the NN 220 are depicted to include only one processor 202 and processor 222, the UE 200 and the NN 220 may include more than one processors. In an embodiment, the one or more memories 204 and the at least one memory 224 are capable of storing instructions, such as an operating system and/or various applications. Furthermore, the one or more memories 204 and the at least one memory 224 may include a storage that may be used to store, for example, at least some of the information and data used in the disclosed embodiments.

Furthermore, the processor 202 and the processor 222 are capable of executing the stored instructions. In an embodiment, the processor 202 and/or the processor 222 may be embodied as a multi-core processor, a single core processor, or a combination of one or more multi-core processors and one or more single core processors. For example, the processor 202 or the processor 222 may be embodied as one or more of various processing devices, such as a coprocessor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, a neural network (NN) chip, an artificial intelligence (AI) accelerator, a tensor processing unit (TPU), a neural processing unit (NPU), or the like. In an embodiment, the processor 202 or the processor 222 may be configured to execute hard-coded functionality. In an embodiment, the processor 202 and the processor 222 are embodied as an executor of software instructions, wherein the instructions may specifically configure processor 202 or processor 222 to perform the algorithms and/or operations described herein when the instructions are executed.

One or more of the memories 204 and/or the memory 224 may be embodied as one or more volatile memory devices, one or more non-volatile memory devices, and/or a combination of one or more volatile memory devices and non-volatile memory devices. For example, the memory 204 may be embodied as semiconductor memories (such as mask ROM, PROM (programmable ROM), EPROM (erasable PROM), flash ROM, RAM (random access memory), etc.).

It is to be noted that when referring to, for example, "providing", "transmitting", "receiving" or "obtaining" etc., this may comprise the NN 220 and the UE 200 exchanging information via, for example, the at least one transceiver 226 and the at least one transceiver 206.

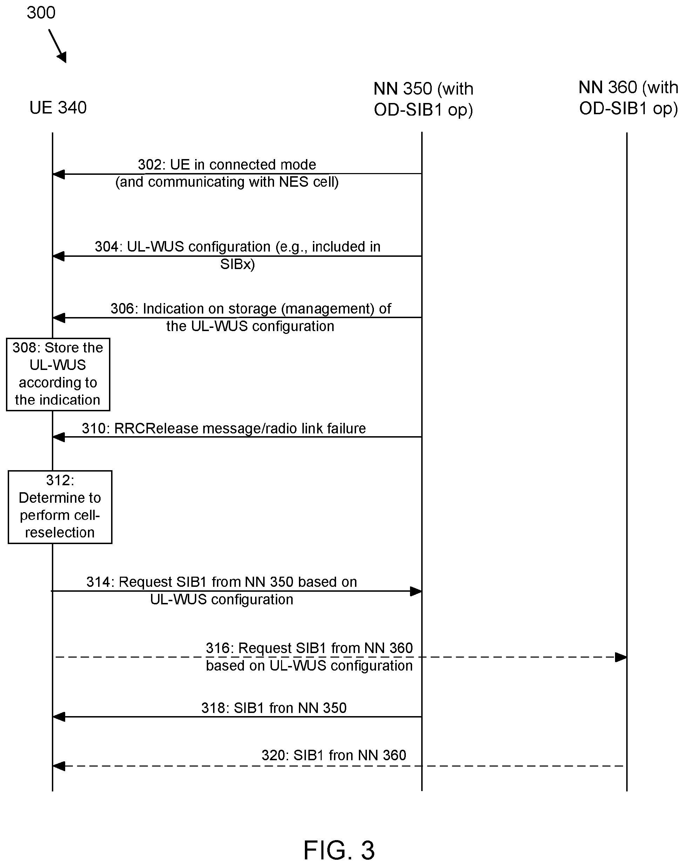

Figure 3 illustrates a signalling diagram 300 according to an example embodiment. The signalling diagram 300 illustrates how a UE 340 can re-establish communications with a network node 350 (NN 350) or network node 360 (NN 360), wherein both NN 350 and NN 360 are configured with OD-SIB1 operation capability and wherein the network provides an indication to the UE 340, how the SIBs (particularly, an UL-WUS configuration) is to be managed. The UE 340 may comprise an embodiment of the UE 200. Further, the NN 350 and NN 360 may comprise embodiments of the NN 220 (e.g., NES cells).

At step 302, the UE 340 may be in connected mode with NN 350 (e.g., RRC _CONNECTED state) and communicating with a NES cell provided by the NN 350, for example.

At step 304, the NN 350 may transmit, to the UE 340, an UL-WUS configuration for at least one cell and wherein the UL-WUS configuration may be related to a request for SIB1 of the at least one cell and the UL-WUS configuration may further comprise a PRACH resource via radio resource configuration. In other words, the at least one UL-WUS configuration may be included in, for example, a SIBx and it may indicate a plurality of neighboring cells to the NN 350 (e.g., NN 360) or the serving cell (e.g., NN 350 itself). This may be referred to as dedicated SIBx-delivery, for example. In some embodiments, step 304 may comprise a transmission of more than one UL-WUS configurations related to an OD-SIB1 request of one or more cells. In other words, the UL-WUS configuration may comprise indications to a plurality of cells. The UL-WUS configuration can be delivered from the NN 350 to the UE 340, via RRC dedicated delivery message, for example (i.e., the UL-WUS configuration is carried in SIBx). In another embodiment, the UL-WUS configuration is delivered in a response to a dedicated RRC message request from the UE 340 to the network.

At step 306, the NN 350 may further transmit, to the UE 340, an indication related to storage of the at least one UL-WUS configuration. Consequently, the indication may be further related to storage management of the SIBx depending on the implementation form.

The indication related to the storage of the UL-WUS configuration may be delivered via, RRC message, for example. Alternatively or addionally, the indication related to the storage of the UL-WUS configuration may comprise an information element activating storage of a SIBx/UL-WUS configuration. Alternatively or additionally, the information element activating the storage of the SIBx/UL-WUS configuration may further comprise a timer with a reference point. Alternatively or additionally, the reference point may comprise at least one of: reception of a dynamic indication, such as DCI/MAC-CE; reception of a RRCRelease message; or when RLF is declared.

The term 'management' as referred above in the context of 'storage the UL-WUS configuration', may indicate to storage management of the UL-WUS configuration by the UE 340. For example, the indication related to the storage of the UL-WUS configuration may comprise indication(s) and/or instructions to the UE 340, on what the UE 340 should do with the storage of the UL-WUS configuration (e.g., store, discard, store only a certain amount of time etc.) Alternatively or additionally, the indication related to the storage of the UL-WUS configuration may comprise an operation performed on the UL-WUS configuration, such as storing at least a portion of a SIB/SIBx and discarding the rest, for example. In other words, based on the indication, the UE 340 may, for example, store only a scope (e.g., a portion) of a SIB/SIBx and discard the rest.

At step 308, the UE 340 may store the UL-WUS configuration according to the received indication at step 306. Storing the UL-WUS configuration may comprise storing the UL-WUS configuration on the one or more memories 204, for example.

At step 310, the UE 340 may experience RLF, or the NN 350 may transmit a RRCRelease message to the UE 340, for example, and consequently, at step 312, the UE 340 may determine to perform cell reselection.

At step 314 the UE 340 may transmit an OD-SIB1 request to the NN 350, if the NN 350 was indicated on the stored UL-WUS configuration.

At step 316 the UE 340 may transmit an OD-SIB1 request to the NN 360, if the NN 360 was indicated on the stored UL-WUS configuration.

At step 318, the UE 340 may receive the requested SIB1 from the NN 350 based on the OD-SIB1 request.

And at step 320, the UE 340 may receive the requested SIB1 from the NN 360 based on the OD-SIB1 request.

It will be noted that the SIB1 received by the UE 340 in response to the OD-SIB1 request may comprise a SIBx. In other words, the SIB1 carried in step 318 and step 320 comprises at least a SIB1, but it may further comprise an UL-WUS configuration for at least a cell provided by the NN 350 before RRCRelease/RLF at step 310, or one or more another cells (e.g., neighboring cells).

The indication related to the storage of the UL-WUS configuration may be implicit or explicit. In other words, the network may explicitly provide instructions to the UE 340 on 'what to do' with the UL-WUS configuration (e.g., 'store this', 'discard that'), or the network may implicitly indicate the UE 340 what it 'should do'.

An implicit indication on what the UE 340 'should do' may comprise, for example, an amount of neighboring cells to a serving cell (e.g., in the embodiment of Figure 3, the serving cell comprises NN 350 before RLF/RRCRelease) in a coverage area (or *serviceAreaID),* for example, and from which the UE 340 can determine whether to store the SIBx related to the received UL-WUS configuration for a certain amount of time. Continuing the example, if a number of neighboring cells are above a threshold, for example, the SIBx can be stored for a small amount of time and vice-versa.

An implicit indication may further comprise a conditional check on more than one variables. For example, if a RSPR (Reference Signal Received Power) measured from an SSB reference signal and a number of neighboring cells is above or below a threshold, the UE 340 can determine whether to store or one or more SIBs/SIBx's. This determination on the conditional combination of variables by the UE 340 may comprise, for example, mathematical operations on the combination of variables, such as sum, difference, multiplication, division etc.

In an embodiment, the indication related to the storage of the UL-WUS configuration may further comprise, for example, an indication to the UE 340 to not delete/discard a SIBx related to the stored UL-WUS configuration in case of cell selection or cell reselection. In other words, the indication may indicate/instruct the UE 340 to keep the SIBx stored and usable in the cell after cell selection/reselection (e.g., after RLF or RRCRelease).

In another embodiment, the indication related to the storage of the UL-WUS configuration may further comprise, for example, instructions to the UE 340 if the SIBx should be stored or should not be stored.

In another embodiment, the indication related to the storage of the UL-WUS configuration may further comprise, for example, an indication/instructions to the UE 340 if one or more SIB1s/SIBx's not related to the received UL-WUS configuration are to be kept stored. For example, the indication related to the storage of the UL-WUS configuration may indicate the UE 340 to discard any UL-WUS configuration/SIBx not related to the received UL-WUS configuration (at step 304) and keep the received SIBx/UL-WUS configuration (at step 304) stored.

The indication related to the storage of the UL-WUS configuration may further indicate the UE 340 to discard any UL-WUS configuration/SIBx not related to the received UL-WUS configuration (at step 304) and keep the received SIBx/UL-WUS configuration (at step 304) stored after RLF/RRCRelease.

In another embodiment, the indication related to the storage of the UL-WUS configuration may further comprise, for example, instructions to the UE 340 if one or more SIB1s/SIBx's not related to the received UL-WUS configuration are to be discarded.

In another embodiment, the indication related to the storage of the UL-WUS configuration may further comprise, for example, instructions to the UE 340 to confirm validity of the received SIBx.

In another embodiment, the indication related to the storage of the UL-WUS configuration may further comprise, for example, an indication/instructions to the UE 340 to confirm validity of the received SIBx after receiving RRCRelease message or after experiencing RLF.

In another embodiment, the indication related to the storage of the UL-WUS configuration may further comprise, for example, an indication/instructions to the UE 340 to confirm validity of a SIBx not related to the received UL-WUS configuration. In other words, the indication may indicate the UE to confirm validity of a SIBx (not related to the received UL-WUS configuration) to help the UE to make decisions which SIBx's are available.

In another embodiment, the indication related to the storage of the UL-WUS configuration may further comprise, for example, an indication/instructions to the UE 340 to discard the SIBx related to the received UL-WUS configuration after confirming validity of another SIBx not related to the received UL-WUS configuration.

In another embodiment, the indication related to the storage of the UL-WUS configuration may further comprise, for example, information related to at least one timer. The information related to at least one timer may indicate the UE 340 to store the SIBx for a certain time, for example (e.g., store for: 1 hour; 2 hours; 3 hours etc.). The timer may have a reference point (indicated in the information related to the timer). The reference point may comprise, for example, RLF by the UE 340 or RRCRelease by the network to the UE 340.

The information related to at least one timer may further comprise, for example, an indication to the UE 340 to discard other SIBs/SIBx's not related to the stored UL-WUS configuration after a certain amount of time.

The timer may comprise a reference point. The reference point may comprise, for example, a time when RLF was detected, or RRCRelease was received, for example. And from the reference point, the timer may expire after a pre-determined amount of time (e.g., indicated by network).

In another embodiment, the indication related to the storage of the UL-WUS configuration may further comprise, for example, that the UE 340 uses the received SIBx after RRCRelease to transmit the OD-SIB1 request.

In another embodiment, the indication related to the storage of the UL-WUS configuration may further comprise, for example, that the UE 340 uses the received SIBx after RLF/RRCRelease to transmit the OD-SIB1 request.

In another embodiment, the indication related to the storage of the UL-WUS configuration may further comprise, for example, an indication/instructions to the UE 340 to store the received SIBx if a number of stored SIBx's not related to the received UL-WUS configuration (at step 304) are below a threshold. In other words, the indication may instruct the UE 340 to check if there are only a few or no stored UL-WUS configurations available for the UE 340.

In another embodiment, the indication related to the storage of the UL-WUS configuration may further comprise, for example, an indication/instructions to the UE 340 to discard the received SIBx in case a number of stored SIBx/UL-WUS configurations exceed a threshold. In other words, if the UE 340 has already a plurality of available UL-WUS configurations for OD-SIB1, the UE 340 may simply discard the latest UL-WUS configuration.

In another embodiment, the indication related to the storage of the UL-WUS configuration may further comprise, for example, an indication/instructions to the UE 340 to discard at least one SIB1/SIBx not related to the received UL-WUS configuration, if a number of stored SIB1s and/or SIBx's exceed a threshold.

In another embodiment, the indication related to the storage of the UL-WUS configuration may further comprise, for example, an indication to the UE 340 that legacy cell selection criteria is not be used as a trigger condition for OD-SIB1 request.

In another embodiment, the indication related to the storage of the UL-WUS configuration may further comprise, for example, an indication to the UE 340 that network dedicated RRC for SIB1 delivery is not to be used, even if *searchSpaceSIB1* is not configured and if a UL-WUS configuration is available.

In another embodiment, the indication related to the storage of the UL-WUS configuration may further comprise, for example, an indication to the UE 340 to discard any stored SIBx/UL-WUS configuration that is older than a certain amount of time.

In an embodiment of the UE 200, the instructions stored in the one or more memories 204, may cause the UE 200 to at least: receive, from a second apparatus, an uplink wake-up signal (UL-WUS) configuration for at least one cell, wherein the UL-WUS configuration is related to a request for system information block #1 (SIB1) of the at least one cell; receive, from the second apparatus, an indication related to storage of the UL-WUS configuration; store the UL-WUS configuration in the first apparatus based on the received indication; determine to perform cell reselection; and in response to the determining to perform the cell reselection, transmit an on-demand SIB1 (OD-SIB1) request based on the stored UL-WUS configuration.

In another embodiment of the UE 200, the UL-WUS configuration is carried in at least one of: a dedicated RRC delivery message; or a response to a dedicated RRC message request.

In another embodiment of the UE 200, the instructions stored in the one or more memories 204, may further cause the UE 200 to at least: transmit the OD-SIB1 request, based on the stored UL-WUS configuration, to at least one of: the second apparatus; or a third apparatus, wherein the third apparatus provides a neighboring cell to a cell provided by the second apparatus.

In another embodiment of the UE 200, at least one of the second apparatus or the third apparatus is configured with on-demand system information block #1 (OD-SIB1).

In another embodiment of the UE 200, the received UL-WUS configuration relates to one or more neighboring cells to a cell provided by the second apparatus, and wherein the indication related to the storage of the UL-WUS configuration indicates at least one neighboring cell from the one or more of neighboring cells in the UL-WUS configuration, and wherein the instructions, when executed by the at least one processor, further cause the apparatus to at least: store at least the UL-WUS configuration of the at least one indicated neighboring cell; and in response to the determining to perform the cell reselection, transmit the OD-SIB1 request to the at least one indicated cell based on the stored UL-WUS configuration.

In another embodiment of the UE 200, the instructions stored in the one or more memories 204, may further cause the UE 200 to at least determine to perform the cell reselection based on at least one of: detecting a radio link failure (RLF); or receiving a radio resource control release message (RRCRelease).

In another embodiment of the UE 200, the indication related to the storage of the UL-WUS configuration comprises information on a timer.

In another embodiment of the UE 200, a reference point for the timer comprises at least one of: RRC release message; or radio link failure detection.

In another embodiment of the UE 200, the indication related to the storage of the UL-WUS configuration further comprises an indication to discard, from the one or more memories, at least one SIBx that is not related to the received UL-WUS configuration.

In another embodiment of the UE 200, the indication related to the storage of the UL-WUS configuration further comprises an indication to discard the stored UL-WUS configuration in case another UL-WUS configuration is received from a cell not provided by the second apparatus.

In another embodiment of the UE 200, the received indication related to the storage of the UL-WUS configuration further comprises information whether a SIBx related to the received UL-WUS configuration is to be kept stored or discarded after the determining to perform the cell reselection.

In another embodiment of the UE 200, the received indication related to the storage of the UL-WUS configuration further comprises instructions to indicate validity of a SIBx related to the received UL-WUS configuration, and the instructions, when executed by the at least one processor, further cause the UE 200 to at least: validate the SIBx related to the received UL-WUS configuration.

In another embodiment of the UE 200, the instructions stored in the one or more memories 204, may further cause the UE 200 to at least: receive a SIB1 based on the transmitted OD-SIB1 request; and transmit a request to update master information block (MIB) based on the received SIB1. Consequently, the UE 200 may receive the updated MIB.

In another embodiment of the UE200, the determining to perform the cell reselection may be further based on at least one of: return from out of coverage; after reconfiguration with sync completion; after entering the network from another Radio Access Technology (RAT); upon receiving an indication that system information has changed; upon receiving a PWS notification; or whenever the UE 200 does not have a valid version of a stored SIB/SIBx.

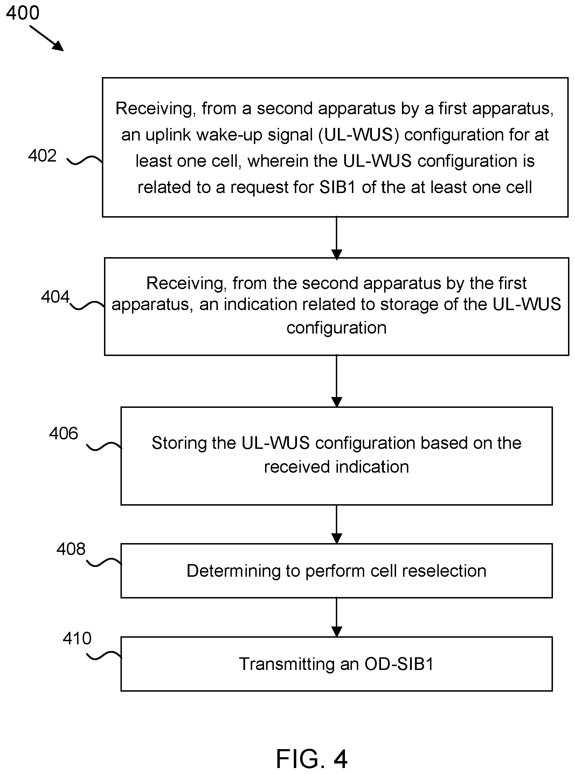

Figure 4 illustrates a flowchart of a method 400 according to an example embodiment. The method 400 may be performed on a computing device, such as the first apparatus 200. An example embodiment of a computer-readable medium may store a computer program comprising instructions that, when executed by a computing device, causes the computing device to perform the method 400.

At step 402, the method 400 may comprise receiving, from a second apparatus by a first apparatus, an uplink wake-up signal (UL-WUS) configuration for at least one cell, wherein the UL-WUS configuration is related to a request for system information block #1 (SIB1) of the at least one cell.

At step 404, the method 400 may further comprise receiving, from the second apparatus by the first apparatus, an indication related to storage of the at least one UL-WUS configuration.

At step 406, the method 400 may further comprise storing, by the first apparatus, the received UL-WUS configuration based on the received indication.

At step 408, the method 400 may further comprise determining to perform cell reselection.

And at step 410, the method 400 may further comprise: in response to the determining to perform the cell reselection, transmitting an on-demand SIB1 (OD-SIB1) request based on the stored UL-WUS configuration.

Embodiments of the method 400 may further comprise various operations and functions of embodiments described herein, such as embodiments of the UE 200 and are not repeated and listed here for the purpose of maintaining clarity. A person skilled in the art will be able to modify the method 400 according to the description of, for example, embodiments of the UE 200 to implement said various embodiments of the method 400.

In an embodiment of the NN 220, the instructions stored in the one or more memories 224, may cause the NN 220 to at least: transmit, to an apparatus, an uplink wake-up signal (UL-WUS) configuration for at least one cell, wherein the UL-WUS configuration is related to a request for system information block #1 (SIB1) of the at least one cell; transmit, to the apparatus, an indication related to storage of the transmitted UL-WUS configuration; receive, from the first apparatus, an on-demand SIB1 (OD-SIB1) request based on the transmitted indication related to the storage of the UL-WUS configuration; and transmit at least one SIB1 to the first apparatus.

In an embodiment of the NN 220, the instructions stored in the one or more memories 224, may further cause the NN 220 to at least: transmit the indication related to the storage of the at least one UL-WUS configuration based on that one or more neighboring cells are configured to operate with on-demand SIB1.

In an embodiment of the NN 220, the indication related to the storage of the UL-WUS configuration comprises information on a timer. The timer may further comprise a reference point. As said above, the network may indicate the UE 200 to start the timer from the reference point. The reference point may comprise, for example, a RRCRelease message and/or RLF detection.

In an embodiment of the NN 220, the indication related to storage of the UL-WUS configuration further comprises instructions to discard at least one SIBx from the one or more memories that is not related to the transmitted UL-WUS configuration.

In an embodiment of the NN 220, the instructions stored in the one or more memories 224, may further cause the NN 220 to at least: update a master information block in response to receiving the OD-SIB1 request; and transmit the updated master information block.

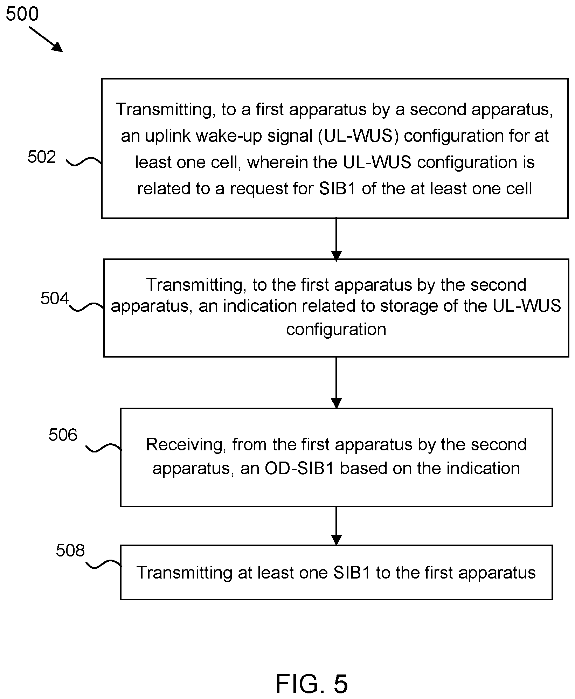

Figure 5 illustrates a flowchart of a method 500 according to an example embodiment. The method 500 may be performed on a computing device, such as the second apparatus 220. An example embodiment of a computer-readable medium may store a computer program comprising instructions that, when executed by a computing device, causes the computing device to perform the method 500.

At step 502, the method 500 may comprise transmitting, to a first apparatus by a second apparatus, an uplink wake-up signal (UL-WUS) configuration for at least one cell, wherein the UL-WUS configuration is related to a request for system information block #1 (SIB1) of the at least one cell.

At step 504, the method 500 may further comprise transmitting, to the first apparatus by the second apparatus, an indication related to storage of the UL-WUS configuration.

At step 506, the method 500 may further comprise receiving, from the first apparatus by the second apparatus, an OD-SIB1 based at least partially on the transmitted indication related to the UL-WUS configuration. Consequently, the OD-SIB1 request is received further based on the UL-WUS configuration.

At step 508, the method 500 may further comprise: in response the OD-SIB1 request, transmitting, by the second apparatus to the first apparatus, at least one SIB1.

Embodiments of the method 500 may further comprise various operations and functions of embodiments described herein, such as embodiments of the NN 220 and are not repeated and listed here for the purpose of maintaining clarity. A person skilled in the art will be able to modify the method 500 according to the description of, for example, embodiments of the NN 220 to implement said various embodiments of the method 500.

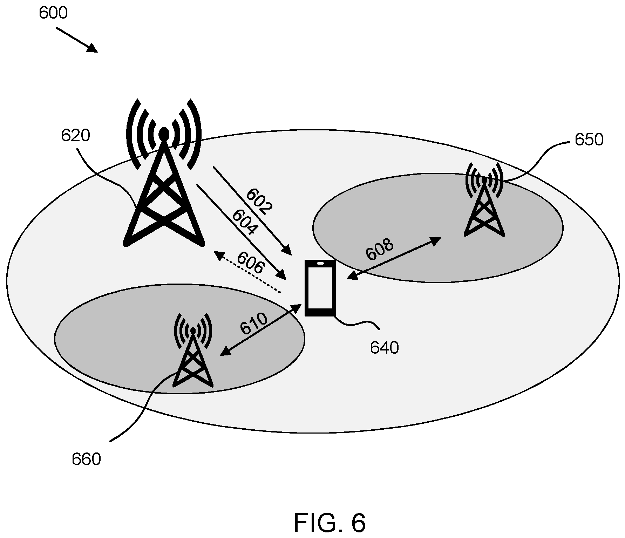

Figure 6 illustrates another example scenario of a communication system 600, where example embodiments can be implemented in.

The communication system 600 may comprise a first cell 620, a second cell 650 and a third cell 660. The communication system 600 may further comprise one or more UEs 640. The UE 640 may comprise an embodiment the UE 200 and/or the UE 340, for example.

At step 602, the first cell 620 (serving cell to UE 640) may provide the UL-WUS configuration to the UE 640 and at step 604, the network may provide the indication related to the storage of the UL-WUS configuration.

Because the UL-WUS configuration can relate to one or more neighboring cells to a serving cell, in the example, at step 602, the UL-WUS configuration may relate to both the second cell 650 and the third cell 660.

Now, as the indication related to the storage of the UL-WUSH configuration can indicates at least one neighboring cell from the one or more of neighboring cells in the UL-WUS configuration, the UE 640 may store the UL-WUS configuration of the indicated cell only - to save space in the memory 204, for example.

In other words, the network may know, that the second cell 650 serves many UEs (not shown in Figure 6), the network can indicate the UE 640 to prefer the third cell 660 in case of RLF, for example, and alternatively or additionally, discard any UL-WUS configuration related to the second cell 650.

At step 606, the UE 640 may experience RLF with the first cell 620. At steps 608 and 610, the UE may transmit the OD-SIB1 request to either the second cell 650, and/or the third cell 660, depending on what was indicated at step 604 - and receive a SIB1/SIBx in return.

In one or more embodiments of the description, the OD-SIB1 request may further comprise a request for SIBx. In other words, the transmitted OD-SIB1 request by the UE 200 may further comprise a request for an UL-WUS configuration.

In an embodiment, the UE 200 can determine to check, if a certain number of stored UL-WUS configurations are below a threshold, and transmit an OD-SIB1 request further comprising a request for an UL-WUS configuration (specifically) to the network.

An example of an apparatus suitable for carrying out the embodiments and examples described above, particularly in reference to the first apparatus 200 (UE 200), may comprise: means for receiving an uplink wake-up signal (UL-WUS) for at least one cell, wherein the UL-WUS configuration is related to a request for system information block #1 (SIB1) of the at least one cell; means for receiving an indication related to storage of the at least one UL-WUS configuration; means for storing the UL-WUS configuration on the first apparatus based on the received indication; means for determining to perform cell reselection; and in response to the determining to perform the cell reselection, means for transmitting an on-demand SIB1 (OD-SIB1) request.

Embodiments of the above-mentioned apparatus may further comprise various operations and functions of embodiments described herein, such as embodiments of the first apparatus 200 and are not repeated and listed here for the purpose of maintaining clarity. A person skilled in the art will be able to modify the above-mentioned apparatus (comprising means for function(s)) according to the description of, for example, embodiments of the first apparatus 200 and embodiments described in reference to Figure 3 and Figure 4, to implement said various embodiments of the above-mentioned apparatus.

The 'means' for performing a function, as referred herein, may comprise, for example, a processor (e.g., 'determining'), a memory (e.g., 'storing') and a transceiver (e.g. 'receiving' and 'transmitting').

Another example of an apparatus suitable for carrying out the embodiments and examples described above, particularly in reference to the second apparatus 220, may comprise: means for transmitting, to a first apparatus, an uplink wake-up signal (UL-WUS) configuration for at least one cell, wherein the UL-WUS configuration is related to a request for system information block #1 (SIB1) of the at least one cell; means for transmitting, to the first apparatus, an indication related to storage of the transmitted UL-WUS configuration; means for receiving, from the first apparatus, an on-demand SIB1 (OD-SIB1) request based on the transmitted indication related to the storage of the UL-WUS configuration; and means for transmitting at least one SIB1 to the first apparatus.

Embodiments of the above-mentioned apparatus may further comprise various operations and functions of embodiments described herein, such as embodiments of the second apparatus 200 and are not repeated and listed here for the purpose of maintaining clarity. A person skilled in the art will be able to modify the above-mentioned apparatus (comprising means for function(s)) according to the description of, for example, embodiments of the second apparatus 220 and embodiments described in reference to Figure 3 and Figure 5, to implement said various embodiments of the above-mentioned apparatus.

One or more of the examples and example embodiments discussed above may enable a solution which may improve storage capacity and processing power consumption of user equipment's by managing storage of system information blocks.

Furthermore, one or more of the example embodiments may enable a solution which may improve RAN power efficiency by enabling OD-SIB1 requests.

Furthermore, one or more of the example embodiments may enable a solution which may improve UE cell selection/reselection latency.

Furthermore, one or more of the example embodiments may enable a solution which may improve network data bandwidth and efficiency by reducing broadcast bandwidth of network cells.

At least a portion of the functionality described herein can be performed, at least in part, by one or more computer program product components such as software components. According to an embodiment, the UE 200 may comprise a processor or processor circuitry, such as for example a microcontroller, configured by the program code when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), Tensor Processing Units (TPUs), and Graphics Processing Units (GPUs).

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

## Claims

1. A first apparatus (200, 340), comprising:
at least one processor (202); and
one or more memories (204) storing instructions that, when executed by the at least one processor, cause the first apparatus to at least:
receive (304), from a second apparatus (220, 350), an uplink wake-up signal (UL-WUS) configuration for at least one cell, wherein the UL-WUS configuration is related to a request for system information block #1 (SIB1) of the at least one cell;
receive (306), from the second apparatus, an indication related to storage of the UL-WUS configuration;
store (308) the UL-WUS configuration in the first apparatus based on the received indication;
determine (312) to perform cell reselection; and
in response to the determining to perform the cell reselection, transmit (314, 316) an on-demand SIB1 (OD-SIB1) request based on the stored UL-WUS configuration.

2. The first apparatus (200, 340) according to claim 1, wherein the UL-WUS configuration is carried in at least one of:
a dedicated RRC delivery message; or
a response to a dedicated RRC message request.

3. The first apparatus (200, 340) according to any preceding claim, wherein the instructions, when executed by the at least one processor (202), further cause the first apparatus to at least:
transmit the OD-SIB1 request, based on the stored UL-WUS configuration, to at least one of:
the second apparatus; or
a third apparatus, wherein the third apparatus provides a neighboring cell to a cell provided by the second apparatus.

4. The first apparatus (200, 340) according to claim 3, wherein at least one of the second apparatus (220) or the third apparatus are configured with on-demand system information block #1 (OD-SIB1).

5. The first apparatus (200, 340) according to claim any of claims 1-4, wherein the received UL-WUS configuration relates to one or more neighboring cells to a cell provided by the second apparatus, and wherein the indication related to the storage of the UL-WUS configuration indicates at least one neighboring cell from the one or more of neighboring cells in the UL-WUS configuration, and wherein the instructions, when executed by the at least one processor, further cause the apparatus to at least:
store at least the UL-WUS configuration of the at least one indicated neighboring cell; and
in response to the determining to perform the cell reselection, transmit the OD-SIB1 request to the at least one indicated cell based on the stored UL-WUS configuration.

6. The first apparatus (200, 340) according to any preceding claim, wherein the instructions, when executed by the at least one processor (202), further cause the apparatus to at least:
determine (312) to perform the cell reselection based on at least one of:
detecting a radio link failure (RLF) (310); or
receiving a radio resource control release message (RRCRelease) (310).

7. The first apparatus (200, 340) according to any preceding claim, wherein the indication related to the storage of the UL-WUS configuration comprises information on a timer.

8. The first apparatus (200, 340) according to claim 7, wherein a reference point for the timer comprises at least one of:
RRC release message; or
radio link failure detection.

9. The first apparatus (200, 340) according to any preceding claim, wherein the indication related to the storage of the UL-WUS configuration further comprises an indication to discard, from the one or more memories, at least one SIBx that is not related to the received UL-WUS configuration.

10. The first apparatus (200, 340) according to any preceding claim, wherein the indication related to the storage of the UL-WUS configuration further comprises an indication to discard the stored UL-WUS configuration in case another UL-WUS configuration is received from a cell not provided by the second apparatus.

11. The first apparatus (200, 340) according to any preceding claim, wherein the received indication related to the storage of the UL-WUS configuration further comprises information whether a SIBx related to the received UL-WUS configuration is to be kept stored or discarded after the determining to perform the cell reselection.

12. The first apparatus (200, 340) according to any preceding claim, wherein the received indication related to the storage of the UL-WUS configuration further comprises instructions to indicate validity of a SIBx related to the received UL-WUS configuration, and the instructions, when executed by the at least one processor (202), further cause the first apparatus to at least:
validate the SIBx related to the received UL-WUS configuration.

13. A method (400), comprising:
receiving (402), from a second apparatus by a first apparatus, an uplink wake-up signal (UL-WUS) configuration for at least one cell, wherein the UL-WUS configuration is related to a request for system information block #1 (SIB1) of the at least one cell;
receiving (404), from the second apparatus by the first apparatus, an indication related to storage of the UL-WUS configuration;
storing (406) the UL-WUS configuration in the first apparatus based on the received indication;
determining (408) to perform cell reselection; and
in response to the determining to perform the cell reselection, transmitting (410) an on-demand SIB1 (OD-SIB1) request based on the stored UL-WUS configuration.

14. A second apparatus (220, 350, 360), comprising:
at least one processor (222); and
at least one memory (224) storing instructions which, when executed by the at least one processor, cause the second apparatus to at least:
transmit (304), to a first apparatus, an uplink wake-up signal (UL-WUS) configuration for at least one cell, wherein the UL-WUS configuration is related to a request for system information block #1 (SIB1) of the at least one cell;
transmit (306), to the first apparatus, an indication related to storage of the transmitted UL-WUS configuration;
receive (314, 316), from the first apparatus, an on-demand SIB1 (OD-SIB1) request based on the transmitted indication related to the storage of the UL-WUS configuration; and
transmit (318, 320) at least one SIB1 to the first apparatus.

15. The second apparatus (220, 350, 360) according to claim 14, wherein the instructions, when executed by the at least one processor (222), further cause the second apparatus to at least:
transmit the indication related to the storage of the at least one UL-WUS configuration based on that one or more neighboring cells are configured to operate with on-demand SIB1.
